# EUROPÄISCHE PATENTSCHRIFT

(11) **EP 4 308 618 B1**
(45) Veröffentlichungstag und Bekanntmachung des Hinweises auf die Patenterteilung: **09.04.2025**
(21) Anmeldenummer: 22710123.5
(22) Anmeldetag: 11.03.2022
(51) Int. Cl.: C08G 18/08, C08G 18/76, C08G 18/48, C08G 18/18

(54) **VERFAHREN ZUR KONTINUIERLICHEN HERSTELLUNG VON POLYURETHANSCHAUMSTOFFEN GERINGER DICHTE UND HOHER BRUCHDEHNUNG**
METHOD FOR THE CONTINUOUS PRODUCTION OF LOW DENSITY AND HIGH ELONGATION POLYURETHANE FOAMS
PROCÉDÉ DE FABRICATION CONTINUE DE MOUSSES DE POLYURÉTHANE À FAIBLE DENSITÉ ET À ALLONGEMENT ÉLEVÉ À LA RUPTURE

(30) Priorität: 17.03.2021 EP 21163160
(43) Veröffentlichungstag der Anmeldung: 24.01.2024
(73) Patentinhaber: Covestro Deutschland AG, 51373 Leverkusen (DE)
(72) Erfinder: KLESCZEWSKI, Bert, 51069 Köln (DE); KLASEN, Christopher, 51065 Köln (DE); HALUPCZOK, Bernard, 51371 Leverkusen (DE); FAHLENKAMP, Sascha, 51061 Köln (DE)
(74) Vertreter: Levpat
(86) Internationale Anmeldenummer: PCT/EP2022/056386
(87) Internationale Veröffentlichungsnummer: WO 2022/194712

(56) Entgegenhaltungen:
- EP-A1- 2 612 876
- EP-A1- 2 700 669
- US-A1- 2006 142 407
- COMMISSION MAK: "4,4'-Methylene diphenyl isocyanate (MDI) and polymeric MDI'' (PMDI) [MAK Value Documentation, 1997]", THE MAK-COLLECTION FOR OCCUPATIONAL HEALTH AND SAFETY, 1 November 2002 (2002-11-01), Weinheim, Germany, pages 66 - 96, XP055831589, Retrieved from the Internet <URL:https://doi.org/10.1002/3527600418.mb10168stae0008> [retrieved on 20210811], DOI: 10.1002/3527600418.mb10168stae0008

## Beschreibung

Die vorliegende Erfindung betrifft ein Verfahren zur kontinuierlichen Herstellung von überwiegend offenzelligen, kaltverformbaren Polyurethanschaumstoffen, die zur Herstellung von Automobilinnenverkleidungen, insbesondere Dachhimmeln und Säulenverkleidungen geeignet sind.

Polyurethan (PUR)-Schaumstoffe als innere Schicht für Sandwichstrukturen (geformte Sandwichplatten) sowie deren Verwendung zur Herstellung von Automobilinnenverkleidungen sind an sich bekannt. Sandwichstrukturen zur Verwendung als Dachhimmel oder Säulenverkleidung werden heutzutage zumeist nach dem sogenannten Kaltformverfahren aus entsprechenden Sandwichplatten hergestellt. Dabei wird eine PUR-Schaumstoffplatte, insbesondere eine PUR-Hartschaumstoffplatte, beidseitig mit einem duromeren Klebstoff und Verstärkungsmaterialien wie Glas- und/oder Naturfasermatten bzw. -vliesen und/oder Glasfaser-Rovings sowie Deckschichten aus Papier, Thermoplastfolien und/oder Faservliesen und ggf. Dekorschichten versehen und in einem Werkzeug bei Temperaturen von 100 bis 150 °C zu einem Sandwich, also einem Verbundwerkstoff, verformt und verpresst.

Insbesondere in der Automobilindustrie geht das Bestreben dahin, möglichst leichte Bauteile zu verwenden, um Ressourcen sowohl bei der Herstellung als auch beim Antrieb von Automobilen zu schonen und so ökologische und ökonomische Vorteile erzielen zu können. Während in Verfahren zur diskontinuierlichen Herstellung von PUR-Schaumstoffen relativ niedrige Rohdichten der resultierenden Schaumstoffe erzielt werden können, ist dies in Verfahren zur kontinuierlichen Herstellung noch nicht gelungen, ohne Einbußen bei anderen, z.B. mechanischen Eigenschaften des resultierenden Schaumstoffs hinnehmen zu müssen. Ein diskontinuierliches Verfahren mit seinen spezifischen Verfahrensparametern und Ausgangsstoffen lässt sich also nicht ohne Weiteres in ein kontinuierliches Verfahren umwandeln oder auf ein solches übertragen. Zudem lässt sich ein Verfahren zur diskontinuierlichen Herstellung leichter kontrollieren, da nur eine definierte Menge an Rohstoffen zur Reaktion gebracht wird, während in einem Verfahren zur kontinuierlichen Herstellung eine theoretisch unendliche Menge an Rohstoffen verarbeitet wird. Ein Verfahren zur kontinuierlichen Herstellung von PUR-Schaumstoffen ist jedoch insofern wünschenswert, als dass größere Mengen an Schaumstoff in kürzerer Zeit produziert werden können und so die Verfahrensökonomie verbessert werden kann.

CN 103275296 und CN 104086747 offenbaren ein Verfahren zur kontinuierlichen Herstellung von PUR-Schaumstoffen, die sich für die Verwendung in Automobilinnenverkleidungen eignen, wobei eine Isocyanatkomponente verwendet wird, die höchstens 50 Gew.-% monomeres Methylendiphenylisocyanat (MDI) aufweist. Eine Bruchdehnung der erhaltenen Schaumstoffe wird nicht offenbart.

EP 2 612 876 A1 offenbart ein Verfahren zur Herstellung von flammgeschützten Polyurethanschaumstoffen mit einer Dichte von 5 bis 50 kg m⁻³, wobei in den Verfahren Polyetherpolyole mit sehr hohen Ethylenoxidgehalten beinhaltende Polyolkomponenten verwendet werden. Die resultierenden Schaumstoffe weisen keine gute Bruchdehnung auf.

US 2006/142407 A1 offenbart ein auf einem Doppeltransportband durchgeführtes kontinuierliches Verfahren zur Herstellung von offenzelligen Polyurethanhartschaumstoffen mit einer Dichte von 38 kg m⁻³.

EP 2 700 669 A1 offenbart ein Verfahren zur Herstellung von plastisch verformbaren Polyurethan-Polyamid-Hartschaumstoffen mit einer Geschlossenzelligkeit von kleiner als 70%, wobei der Schaumstoff aus einem eine oder mehrere Carbonsäuren mit einer Funktionalität von mindestens 2, aber kein Wasser umfassenden Reaktionsgemisch hergestellt wird.

Aufgabe der vorliegenden Erfindung war es daher, ein Verfahren zur kontinuierlichen Herstellung von Polyurethanschaumstoffen geringer Rohdichte bereitzustellen, insbesondere wobei die Bruchdehnung des resultierenden Schaumstoffs im Vergleich zum aus Verfahren zur diskontinuierlichen Herstellung erhältlichen Schaumstoff verbessert ist.

Überraschend wurde gefunden, dass die Aufgabe gelöst werden konnte durch ein Verfahren zur kontinuierlichen Herstellung von Polyurethanschaumstoff mit einer Rohdichte gemäß DIN EN 826:05/2013 von nicht mehr als 32 kg/m³, umfassend die Schritte
i) Bereitstellen
   einer Isocyanatkomponente A umfassend
   A1 55 - 90 Gew.-% monomeres Methylendiphenylisocyanat, bezogen auf die Gesamtmenge an Isocyanatkomponente A,
   einer gegenüber Isocyanaten reaktiven Komponente B umfassend gegenüber Isocyanaten reaktive, Alkylenoxideinheiten aufweisende, Verbindungen, wobei, falls die gegenüber Isocyanaten reaktive Komponente B ein Polyetherpolyol oder mehrere Polyetherpolyole umfasst, die Alkylenoxideinheiten des Polyetherpolyols beziehungsweise der Polyetherpolyole im arithmetischen Durchschnitt weniger als 40 Gew.-%, bezogen auf die Gesamtmenge der Alkylenoxideinheiten des Polyetherpolyols beziehungsweise der Polyetherpolyole, Ethylenoxid umfassen
   einer Katalysatorkomponente C,
   einer Treibmittelkomponente D umfassend Wasser,
   einer Schaumstabilisatorkomponente E
   und gegebenenfalls einer Hilfs- und/oder Zusatzkomponente F umfassend Hilfs- und/oder Zusatzmittel,
ii) Vermischen der Komponenten A, B, C, D und E sowie gegebenenfalls F, wobei die Kennzahl 85 - 125 beträgt, um eine Mischung zu erhalten,
iii) Austragen der in Schritt ii) erhaltenen Mischung aus einer Austragsvorrichtung auf eine Fläche, wobei die Fläche und die Austragsvorrichtung sich während zumindest eines Teils des Austragens kontinuierlich relativ zueinander bewegen, um eine ausgetragene Mischung zu erhalten,
iv) Schäumenlassen der in Schritt iii) erhaltenen ausgetragenen Mischung auf der Fläche, um eine geschäumte Mischung zu erhalten,
v) Aushärtenlassen der in Schritt iv) erhaltenen geschäumten Mischung, um den Polyurethanschaumstoff zu erhalten.

Es handelt sich also um ein Verfahren zur Herstellung eines Polyurethan-Schaumstoffs, der eine Rohdichte von 32 kg/m³ oder weniger aufweist.

Das Verfahren weist einen Schritt i) auf, in dem die obligatorischen Komponenten A, B, C, D und E sowie gegebenenfalls die optionale Komponente F bereitgestellt werden. Bei diesen Komponenten handelt es sich um eine Isocyanatkomponente A, eine gegenüber Isocyanaten reaktive Komponente B, eine Katalysatorkomponente C, eine Treibmittelkomponente D, eine Schaumstabilisatorkomponente E und gegebenenfalls eine Hilfs- und/oder Zusatzkomponente F.

Die Isocyanatkomponente A umfasst 55 - 90 Gew.-% monomeres Methylendiphenylisocyanat (MDI) A1, bezogen auf die Gesamtmenge an Isocyanatkomponente A.

Die gegenüber Isocyanaten reaktive Komponente B umfasst mindestens eine Verbindung, die wenigstens zwei gegenüber Isocyanaten reaktive Gruppen und Alkylenoxideinheiten aufweist. Falls die gegenüber Isocyanaten reaktive Komponente B ein Polyetherpolyol oder mehrere Polyetherpolyole umfasst, umfassen die Alkylenoxideinheiten des Polyetherpolyols beziehungsweise der Polyetherpolyole im arithmetischen Durchschnitt weniger als 40 Gew.-%, bevorzugt weniger als 30 Gew.-%, jeweils bezogen auf die Gesamtmenge der Alkylenoxideinheiten des Polyetherpolyols beziehungsweise der Polyetherpolyole, Ethylenoxid.

Enthält beispielsweise eine gegenüber Isocyanaten reaktive Komponente K drei Polyetherpolyole P1, P2 und P3 in einem Verhältnis, dass die in P1, P2 beziehungsweise P3 vorliegenden Alkylenoxide im Gewichtsverhältnis 1:1:2 vorliegen; und beträgt der Ethylenoxidgehalt des Polyetherpolyols P1 50 Gew.-%, bezogen auf die Gesamtmenge der Alkylenoxideinheiten von P1; und beträgt der Ethylenoxidgehalt des Polyetherpolyols P2 48 Gew.-%, bezogen auf die Gesamtmenge der Alkylenoxideinheiten von P2; und beträgt der Ethylenoxidgehalt des Polyetherpolyols P3 1 Gew.-%, bezogen auf die Gesamtmenge der Alkylenoxideinheiten von P3; so umfassen die Alkylenoxideinheiten der Polyetherpolyole P1, P2 und P3 im arithmetischen Durchschnitt (1·50 Gew.-% + 1·48 Gew.-% + 2·1 Gew.-%)/(1 + 1 + 2) = 100 Ge.-%/4 = 25 Gew.-%. Die beispielhafte Komponente K erfüllt somit das Merkmal, dass die Alkylenoxideinheiten der umfassten Polyetherpolyole weniger als 40 Gew.-%, bezogen auf die Gesamtmenge der Alkylenoxideinheiten der Polyetherpolyole, Ethlyenoxid aufweisen, auch wenn einzelne Polyetherpolyole P1 und P2 für sich betrachtet mehr als 40 Gew.-% Ethylenoxid, bezogen auf die Gesamtmenge der Alkylenoxideinheiten von P1 beziehungsweise P2 aufweisen.

Bevorzugt handelt es sich bei der mindestens einen Verbindung, die wenigstens zwei gegenüber Isocyanaten reaktive Gruppen und Alkylenoxideinheiten aufweist, um mindestens ein Polyetherpolyol.

Bei der Katalysatorkomponente C handelt es sich um eine katalytisch wirkende Komponente, das heißt sie umfasst mindestens eine Verbindung, die als Katalysator wirkt.

Die Treibmittelkomponente D umfasst Wasser als Treibmittel.

Bei der Schaumstabilisatorkomponente E handelt es sich um eine schaumstabilisierend wirkende Komponente, das heißt sie umfasst mindestens eine Verbindung, die als Schaumstabilisator wirkt.

Die optionale Komponente F umfasst Hilfs- und/oder Zusatzmittel.

In einem Schritt ii) werden die bereitgestellten Komponenten, das heißt die Komponenten A, B, C, D und E sowie gegebenenfalls F miteinander vermischt, wobei die Kennzahl zwischen 85 und 125 beträgt. Das Resultat des Vermischens ist eine Mischung.

In einem Schritt iii) trägt man die Mischung, die man in Schritt ii) erhalten hat, aus einer Austragsvorrichtung auf eine Fläche aus. Die Austragsvorrichtung und die Fläche bewegen sich relativ zueinander zumindest während eines Teils des Austragens. Man erhält dabei eine ausgetragene Mischung.

In einem Schritt iv) lässt man die in Schritt iii) erhaltene ausgetragene Mischung auf der Fläche schäumen. Man erhält dabei eine geschäumte Mischung.

In einem Schritt v) lässt man die in Schritt iv) erhaltene geschäumte Mischung aushärten. Man erhält dabei den Polyurethanschaumstoff mit einer Rohdichte gemäß DIN EN 826:05/2013 von nicht mehr als 32 kg/m³, vorzugsweise von nicht mehr als 30 kg/m³, mehr bevorzugt von nicht mehr als 28 kg/m³.

Im Sinne dieser Anmeldung handelt es sich bei monomerem MDI um Methylendiphenylisocyanat mit zwei Phenyl- bzw. zwei Isocyanatgruppen, das heißt um eines der drei Isomere 2,2'-MDI, 2,4'-MDI, 4,4'-MDI oder eine Mischung aus zwei oder drei der genannten Isomere.

Im Sinne dieser Anmeldung handelt es sich bei oligomerem MDI um Methylendiphenylisocyanat mit wenigstens drei Phenyl- bzw. drei Isocyanatgruppen.

Die Kennzahl beschreibt im Sinne dieser Anmeldung das mit 100 multiplizierte Verhältnis der reaktiven Wasserstoffatome der gegenüber Isocyanaten reaktiven Verbindungen in den Komponenten B, C, D, E und F, jeweils soweit in diesen gegenüber Isocyanaten reaktive Verbindungen vorhanden sind, zu der Anzahl der NCO-Gruppen der Isocyanatkomponente A. Bei einer Kennzahl von 100 liegt ein äquimolares Verhältnis (1:1) von reaktiven Wasserstoffatomen zu NCO-Gruppen vor. Eine Kennzahl größer 100 beschreibt einen Überschuss an NCO-Gruppen und eine Kennzahl kleiner 100 einen Unterschuss an NCO-Gruppen.

Der Isocyanatgehalt beschreibt die prozentuale Gewichtsmenge an Isocyanatgruppen in einer Verbindung bzw. einem Gemisch von Verbindungen und ist definiert als Quotient aus der Masse der Isocyanatgruppen und der Gesamtmasse der Verbindung bzw. des Gemischs in Prozent. Die Bestimmung des NCO-Gehaltes erfolgte nach DIN EN ISO 11909.

Die OHZ (OH-Zahl, Hydroxylzahl) ist ein Maß für den Gehalt an Hydroxygruppen in dem jeweiligen Polyol bzw. der Polyolmischung. Die OHZ gibt die Menge Kaliumhydroxid in Milligramm an, welche der bei der Acetylierung von einem Gramm Polyol gebundenen Menge Essigsäure gleichwertig ist. Die Bestimmung der OHZ erfolgte nach DIN 53240.

Die Funktionalität im Sinne dieser Anmeldung ist die theoretische Funktionalität, bezogen auf die Anzahl aktiver Wasserstoffe in den Startersubstanzen, aus denen Polyole wie Polyether- oder Polyesterpolyole hergestellt werden. Für jedes individuelle Polyol ist also die theoretische Funktionalität eine ganze Zahl. Mischungen solcher Polyole, beispielsweise aus einer Mischung aus di- oder trifunktionellen Startersubstanzen erzeugte Polyole, können eine theoretische Funktionalität aufweisen, die zwischen den Funktionalitäten der Startersubstanzen liegt. Beispielsweise weist eine Mischung aus Polyolen, hergestellt aus einer äquimolaren Mischung aus Ethylenglykol und Glycerin, eine theoretische Funktionalität von 2,5 auf.

Im Sinne dieser Anmeldung bedeutet der Begriff "kontinuierliche Herstellung", dass man die Mischung in Schritt iii) auf einer Fläche, z.B. auf dem Boden einer Schäumform, schäumen lässt, die sich während zumindest eines Teils des Austragens relativ zu einer Austragsvorrichtung, aus der man die in Schritt ii) erhaltene Mischung austrägt, bewegt, insbesondere kontinuierlich bewegt. Vorzugsweise bewegt, jeweils besonders bevorzugt kontinuierlich bewegt, sich die Fläche relativ zu der Austragsvorrichtung während mindestens 50% der Dauer des Austragens, insbesondere während mindestens 75% oder 90%, insbesondere während mindestens 95% der Dauer des Austragens. Vorzugsweise ändert sich die Richtung der relativen Bewegung zueinander während des Austragens um nicht mehr als ±20° bezogen auf die Raumrichtung, in der die relative Bewegung zu einem Zeitpunkt, in dem die relative Bewegung beginnt, abläuft. Vorzugsweise weist die relative Bewegung der Fläche, auf die die in Schritt ii) erhaltene Mischung ausgetragen wird, und der Austragsvorrichtung zueinander während mindestens 50%, mehr bevorzugt während mindestens 75% oder 90%, am meisten bevorzugt während mindestens 95% der Dauer des Austragens eine konstante Geschwindigkeit auf.

Im Sinne dieser Anmeldung kann das Vermischen in Schritt ii) so gestaltet sein, dass einzelne Komponenten vorgemischt werden, bevor sie mit der oder den übrigen Komponenten gemischt werden. Zum Beispiel können die Komponenten B, C, D, E sowie gegebenenfalls F vorgemischt werden, bevor sie mit der Komponente A vermischt werden. Es können auch zunächst die Komponenten B, C und E sowie gegebenenfalls F vorgemischt werden, bevor sie zunächst mit der Komponente D vermischt werden, bevor dieses Gemisch zuletzt mit der Komponente A vermischt wird.

Die Schritte i), ii), iii), iv) und v) des erfindungsgemäßen Verfahrens werden vorzugsweise in dieser Reihenfolge durchlaufen.

In einer Ausführungsform bewegt sich die Fläche, auf die die in Schritt ii) erhaltene Mischung ausgetragen wird. Hierbei kann die Austragsvorrichtung, aus der die in Schritt ii) erhaltene Mischung ausgetragen wird, räumlich fix sein. In einer anderen Ausführungsform bewegt sich die Austragsvorrichtung, aus der die in Schritt ii) erhaltene Mischung ausgetragen wird. Hierbei kann die Fläche, auf die die in Schritt ii) erhaltene Mischung ausgetragen wird, räumlich fix sein.

Die Isocyanatkomponente A umfasst 55 - 90 Gew.-% monomeres MDI A1, bezogen auf die Gesamtmenge an Isocyanatkomponente A. Vorzugsweise umfasst die Isocyanatkomponente A monomeres MDI A1 und oligomeres MDI A2, wobei der Anteil monomeren MDIs 55 - 90 Gew.-% und der Anteil oligomeren MDIs 10 - 45 Gew.-%, jeweils bezogen auf die Gesamtmenge an Isocyanatkomponente A, beträgt. Besonders bevorzugt beträgt die Summe der Anteile von A1 und A2 100 Gew.-%, bezogen auf die Gesamtmenge an Isocyanatkomponente A.

Grundsätzlich kann A1 aus jedem der drei Isomere 2,2'-MDI, 2,4'-MDI und 4,4'-MDI bestehen, oder aus Mischungen von zwei oder drei der genannten Isomere. Bevorzugt beträgt der Anteil des 4,4'-MDI 25 - 75 Gew.-%, der Anteil des 2,4'-MDI 1 - 30 Gew.-% und der Anteil des 2,2'-MDI 0 - 10 Gew.-%, jeweils bezogen auf die Gesamtmenge der Komponente A. Mehr bevorzugt sind Anteile von 35 - 55 Gew.-% des 4,4'-MDI, 10 - 25 Gew.-% des 2,4'-MDI und 0,1 - 8 Gew.-% oder 0,1 - 5 Gew.-% 2,2'-MDI, jeweils bezogen auf die Gesamtmenge der Komponente A.

Die Kennzahl beträgt im erfindungsgemäßen Verfahren bevorzugt 90-125.

Die gegenüber Isocyanaten reaktive Komponente B umfasst vorzugsweise die Polyetherpolyole B1, B2 und B3, weiterhin bevorzugt zusätzlich das Polyesterpolyol B4.

Es handelt sich bei B1 um ein Polyetherpolyol mit einer OH-Zahl von 25 - 60 mg KOH/g und einer Funktionalität f von 2,0 - 6,0, erhältlich aus der Reaktion einer Startersubstanz b1 mit Ethylenoxid und Propylenoxid, wobei der Anteil an von Ethylenoxid abgeleiteten Einheiten im Polyetherpolyol B1 10 - 40 Gew.-% bezogen auf die Gesamtmenge der von Ethylenoxid und Propylenoxid abgeleiteten Einheiten beträgt. Ethylenoxid und Propylenoxid können hierbei statistisch oder blockweise oder abwechselnd statistisch und blockweise umgesetzt werden.

Bei b1 handelt es sich vorzugsweise um zwei- bis sechswertige Alkohole und/oder Amine, zum Beispiel Ethylenglykol, Diethylenglykol, Wasser, 1,2-Propylenglykol, 1,3-Propylenglykol, 1,4-Butandiol, Neopentylglykol, Bisphenole, Glycerin, Trimethylolpropan, Triethanolamin, Ethylendiamin, ortho-Toluylendiamin, Sorbit und seinen Isomeren, Mischungen aus Zucker und/oder Sorbit mit Glykolen oder Mischungen aus zwei oder mehr der genannten Verbindungen. Besonders bevorzugt sind Trimethylolpropan, Glycerin, Ethylenglykol, Diethylenglykol, Wasser, 1,3-Propylenglykol und 1,2-Propylenglykol.

B2 bzw. B3 sind Polyetherpolyole mit einer OH-Zahl von 150 - 650 mg KOH/g und einer Funktionalität f von 3,0 - 6,0 (Polyetherpolyol B2) bzw. mit einer OH-Zahl von 300 - 900 mg KOH/g und einer Funktionalität f von 2,0 - 2,9 (Polyetherpolyol B3).

Es handelt sich bei B2 und B3 unabhängig voneinander um Polyhydroxypolyether, welche auf an sich bekannte Weise durch Polyaddition von Alkylenoxiden an polyfunktionelle Startersubstanzen in Gegenwart von Katalysatoren hergestellt werden können. Bevorzugt werden die erfindungsgemäß eingesetzten Poly(oxyalkylen)polyole aus einer Starterverbindung oder einem Starterverbindungsgemisch mit durchschnittlich 3,0 bis 6,0 aktiven Wasserstoffatomen im Fall von B2 bzw. 2,0 - 2,9 aktiven Wasserstoffatomen im Fall von B3 und einem oder mehreren Alkylenoxiden hergestellt. Bevorzugte Starterverbindungen sind Moleküle mit 2 bis 8, insbesondere 3 bis 8, besonders bevorzugt 3 bis 6, Hydroxylgruppen pro Molekül wie Triethanolamin, Glycerin, Trimethylolpropan, Pentaerythrit, Sorbit und Saccharose. Die Startersubstanzen können allein oder im Gemisch, unter anderem mit difunktionellen Startersubstanzen wie Diethylenglykol, Dipropylenglykol, Triethylenglykol, Tripropylenglykol, 1,4-Butandiol, 1,6-Hexandiol verwendet werden. Die erfindungsgemäß eingesetzten Polyetherpolyole werden aus einem oder mehreren Alkylenoxiden hergestellt. Bevorzugt verwendete Alkylenoxide sind Ethylenoxid, Propylenoxid und Butylenoxid. Diese können allein oder im Gemisch verwendet werden. Bei Verwendung im Gemisch ist es möglich, die Alkylenoxide statistisch oder blockweise oder beides abwechselnd umzusetzen.

Im Fall von Polyesterpolyolen, z.B. Polyesterpolyol B4, sind diese bevorzugt durch Veresterung von Phthalsäureanhydrid, Terephthalsäure, Isophthalsäure, Glutar-, Bernstein-, und/oder Adipinsäure mit Ethylen-, Diethylen-, Propylenglykol, Butandiol, Hexandiol, Trimethylolpropan, Glycerin und anderen erhältlich. Besonders bevorzugt ist die Verwendung eines Umsetzungsproduktes aus Phthalsäureanhydrid, Diethylenglykol und Ethylenoxid.

Im Fall von Polycarbonatpolyolen sind diese bevorzugt durch Umsetzung von Phosgen, Dimethylcarbonat, Diethylcarbonat oder Diphenylcarbonat mit difunktionellen Alkoholen oder Polyesterpolyolen oder Polyetherpolyolen erhältlich.

Im Fall von Polyethercarbonatpolyolen sind diese bevorzugt erhältlich aus der Umsetzung einer Startersubstanz, wie sie auch bei der Herstellung der Polyetherpolyole verwendet werden kann, mit Kohlendioxid und einem Alkylenoxid, vorzugsweise Ethylenoxid, Propylenoxid, Butylenoxid oder Mischungen aus wenigstens zwei hieraus, insbesondere bevorzugt in Gegenwart eines Doppelmetallcyanid-Katalysators.

In einer Ausführungsform umfasst die gegenüber Isocyanaten reaktive Komponente B ein Polyesterpolyol B4 mit einer OH-Zahl von 150 - 500 mg KOH/g und einer Funktionalität f von 2,0 - 3,5, bevorzugt hergestellt durch Veresterung von Phthalsäureanhydrid, Terephthalsäure, Isophthalsäure, Glutarsäure, Bernsteinsäure, und/oder Adipinsäure mit Ethylenglykol, Diethylenglykol, Propylenglykol, Butandiol, Hexandiol, Trimethylolpropan und/oder Glycerin. Besonders bevorzugt ist die Verwendung eines Umsetzungsproduktes aus Phthalsäureanhydrid, Diethylenglykol und Ethylenoxid.

Die gegenüber Isocyanaten reaktive Komponente B weist vorzugsweise 10 - 60 Gew.-% der Komponente B1, 10 - 50 Gew.-% der Komponente B2, 5 - 30 Gew.-% der Komponente B3 sowie 0 - 25 Gew.-% der Komponente B4, jeweils bezogen auf die Gesamtmenge an gegenüber Isocyanaten reaktiver Komponente B, auf. Besonders bevorzugt weist die gegenüber Isocyanaten reaktive Komponente B 20 - 50 Gew.-% der Komponente B1, 20 - 40 Gew.-% der Komponente B2, 10 - 25 Gew.-% der Komponente B3 sowie 0 - 20 Gew.-% der Komponente B4 oder 20 - 50 Gew.-% der Komponente B1, 20 - 40 Gew.-% der Komponente B2, 10 - 25 Gew.-% der Komponente B3 sowie 1 - 20 Gew.-% der Komponente B4, jeweils bezogen auf die Gesamtmenge an gegenüber Isocyanaten reaktiver Komponente B, auf

Die Katalysatorkomponente C umfasst Verbindungen, die geeignet sind, die Reaktion der Isocyanatkomponente A mit Wasser D und/oder der gegenüber Isocyanaten reaktiven Komponente B zu beschleunigen.

Sie umfasst in einer Ausführungsform mindestens zwei katalytisch wirksame Verbindungen, das heißt Verbindungen, die geeignet sind, die Reaktion der Isocyanatkomponente A mit Wasser D und/oder der gegenüber Isocyanaten reaktiven Komponente B zu beschleunigen. Beispiele solcher Verbindungen sind organische Metallverbindungen sowie Amine.

Beispiele für geeignete, katalytisch aktive Metallverbindungen sind Zinn(II)-Salze von Carbonsäuren mit 2-24 Kohlenstoffatomen wie Zinn(II)-2-ethylhexanoat, Zinn(II)-2-butyloctoat oder Zinn(II)ricinoleat sowie Organozinn(IV)verbindungen wie Dibutylzinn(IV)dilaurat oder Dimethylzinn(IV)neodecanoat.

Vorzugsweise umfasst C ein einbaubares Amin C1 und ein nicht einbaubares Amin C2. Bei einem einbaubaren Amin handelt es sich um eine Verbindung, die sowohl mindestens eine Aminogruppe als auch mindestens eine gegenüber Isocyanaten reaktive Gruppe aufweist, wobei es sich bei der Aminogruppe um die mindestens eine gegenüber Isocyanaten reaktive Gruppe handeln kann. Bei einem nicht einbaubaren Amin handelt es sich um eine Verbindung, die sowohl mindestens eine Aminogruppe als auch keine gegenüber Isocyanaten reaktive Gruppe aufweist.

Geeignete nicht einbaubare Amine C2 sind zum Beispiel die tertiären Amine Triethylamin, Tributylamin, Dimethylcyclohexylamin, Dimethylbenzylamin, N-Methylimidazol, N-Methyl-,N-ethyl-,N-cyclohexylmorpholin, N,N,N',N'-Tetramethylethylendiamin, N,N,N',N'-Tetramethylbutylendiamin, N,N,N',N'-Tetramethylhexylendiamin-1,6, Pentamethyldiethylentriamin, Tetramethyldiaminoethylether, Bis-(dimethylaminopropy1)-harnstoff, Dimethylpiperazin, 1,2-Dimethylimidazol, 1-Aza-bicyclo-[3,3,0]-octan, 1,4-Diaza-bicyclo-[2,2,2]-octan.

Geeignete einbaubare Amine C1 sind zum Beispiel N,N-Dimethylaminopropylamin, Bis-(Dimethylaminopropyl)-amin, N,N-Dimethylaminopropyl-N'-methyl-ethanolamin, Dimethylaminoethoxyethanol, Bis-(Dimethylaminopropyl)amino-2-propanol, N,N-Dimethylaminopropyldipropanolamin, N,N,N'-Trimethyl-N'-hydroxyethylbisaminoethylether, N,N-Dimethylaminopropylharnstoff, N-(2-HydroxypropyI)-imidazol, N-(2-Hy-droxyethyl)-imidazol, N-(2-AminopropyI)-imidazol, 2-((Dimethylamino)ethyl)methylaminopropanol, 1,1'-((3-(Dimethylamino)propyl)imino)bis-2-propanol und/oder Umsetzungsprodukte aus Acetessigsäureethylester, Polyetherpolyolen und 1-(Dimethylamino)-3-aminopropan sowie insbesondere das Tallolsäure-Amidsalz des N,N-Dimethylaminopropylamins.

Die Treibmittelkomponente D umfasst erfindungsgemäß Wasser. Sie kann neben Wasser weitere Treibmittel umfassen, z.B. physikalische Treibmittel oder weitere chemische Treibmittel. Beispiele solcher weiterer Treibmittel sind flüssiges Kohlendioxid, Kohlenwasserstoffe wie Cyclopentan oder Pentan, partiell fluorierte oder perfluorierte Alkene oder Ameisensäure.

In einer Ausführungsform umfasst die Treibmittelkomponente D Wasser in einer Menge von wenigstens 4,0 Gew.-%, bevorzugt von wenigstens 5,0 Gew.-%, mehr bevorzugt von wenigstens 5,5 Gew.-%, am meisten bevorzugt von wenigstens 5,7 Gew.-%, jeweils bezogen auf die Gesamtmenge an gegenüber Isocyanaten reaktiver Komponente B.

In einer weiteren Ausführungsform besteht die Treibmittelkomponente D aus Wasser, wobei die Menge der Treibmittelkomponente D wenigstens 4,0 Gew.-%, bevorzugt wenigstens 5,0 Gew.-%, mehr bevorzugt wenigstens 5,5 Gew.-%, am meisten bevorzugt wenigstens 5,7 Gew.-%, jeweils bezogen auf die Gesamtmenge an gegenüber Isocyanaten reaktiver Komponente B, betragen kann.

Bei der Schaumstabilisatorkomponente E handelt es sich um eine schaumstabilisierend wirkende Komponente, das heißt sie umfasst mindestens eine Verbindung, die als Schaumstabilisator wirkt. Beispiele solcher schaumstabilisierend wirkender Verbindungen sind Siloxan-Polyoxyalkylen-Copolymere, Organopolysiloxane, ethoxylierte Fettalkohole und Alkylphenole, fettsäurebasierte Aminoxide und Betaine und Ricinusöl- bzw. Ricinolsäureester. Vorzugsweise beträgt die Menge der Komponente E 0,1 - 4,0 Gew.-%, bezogen auf die Gesamtmenge an gegenüber Isocyanaten reaktiver Komponente B.

Bei der optionalen Hilfs- und/oder Zusatzkomponente F handelt es sich um eine Komponente, die Hilfs- und/oder Zusatzmittel umfasst, zum Beispiel Farbmittel, anorganische Füllstoffe, Emulgatoren, Zellöffner oder Flammschutzmittel.

Als Zellöffner wirken beispielweise Paraffine, Polybutadiene, Fettalkohole und gegebenenfalls polyalkylenoxidmodifizierte Dimethylpolysiloxane.

Weitere Beispiele von gegebenenfalls mit zu verwendenden Hilfs- und/oder Zusatzmitteln sind Emulgatoren, Reaktionsverzögerer, Stabilisatoren gegen Alterungs- und Witterungseinflüsse, Weichmacher, anorganische flammhemmende Substanzen, phosphor- und/oder halogenhaltige organische Flammschutzmittel, fungistatisch und bakteriostatisch wirksame Substanzen, Pigmente und Farbstoffe sowie die an sich bekannten üblichen organischen und anorganischen Füllstoffe.

Als Emulgatoren seien beispielsweise genannt ethoxylierte Alkylphenole, Alkalimetallsalze von Fettsäuren, Alkalimetallsalze von sulfatierten Fettsäuren, Alkalimetallsalze von Sulfonsäuren und Salze von Fettsäuren und Aminen.

In einer Ausführungsform erhält man einen Polyurethanschaumstoff mit einer Bruchdehnung gemäß DIN 53430:09/1975 von wenigstens 16%.

In einer Ausführungsform handelt es sich bei dem erfindungsgemäßen Verfahren nicht um ein auf einem Doppeltransportband (Englisch "double conveyor belt") durchgeführtes Verfahren.

In einer Ausführungsform umfasst die in Schritt ii) erhaltene und in Schritt iii) auf eine Fläche ausgetragene Mischung keine oder im Wesentlichen keine Carbonsäure mit einer Funktionalität von mindestens 2. Für den Fachmann ist klar, dass hiermit gemeint ist, dass keine freien Carbonsäuren mit einer Funktionalität von mindestens 2 oder deren Salze in der Mischung vorliegen, Carbonsäuren aber Bestandteile von in der Mischung möglicherweise vorliegenden Polyesterpolyolen sein können.

Im Sinne dieser Anmeldung bedeutet der Ausdruck "umfasst X im Wesentlichen kein Y", dass Y in X höchstens als technisch übliche Verunreinigung vorliegt.

Ein weiterer Aspekt der vorliegenden Erfindung betrifft einen Polyurethanschaumstoff mit einer Rohdichte gemäß DIN EN 826:05/2013 von nicht mehr als 32 kg/m³, bevorzugt nicht mehr als 30 kg/m³, mehr bevorzugt von nicht mehr als 28 kg/m³, erhältlich nach dem erfindungsgemäßen Verfahren. Besonders bevorzugt weist der Polyurethanschaumstoff eine Rohdichte von 20 - 28 kg/m³, am meisten bevorzugt von 22 - 28 kg/m³, auf.

In einer weiteren Ausführungsform weist dieser Polyurethanschaumstoff weiterhin eine Bruchdehnung gemäß DIN 53430:09/1975 von wenigstens 16% auf.

Ein weiterer Aspekt betrifft eine Verwendung des erfindungsgemäßen Polyurethanschaumstoffs in Automobilinnenraumverkleidungen. Beispiele solcher Verkleidungen sind Dachhimmel oder Säulenverkleidungen.

Die vorliegende Erfindung wird durch die nachfolgenden Beispiele näher erläutert, ohne durch diese eingeschränkt zu werden.

### Beispiele:

### Verwendete Rohstoffe:

Polyol A: Polyether aus Propylenglykol als Startermolekül mit einer Hydroxylzahl von 28 mg KOH/g, mit endständig überwiegend primären Hydroxylgruppen und mit 70 Gew.-% Propylenoxid und 30 Gew.-% Ethylenoxideinheiten bezogen auf die Gesamtmenge der Alkylenoxideinheiten
Polyol B: Polyether basierend auf Glycerin als Startermolekül mit einer Hydroxylzahl von 565 mg KOH/g und 100 Gew.-% Propylenoxideinheiten bezogen auf die Gesamtmenge der Alkylenoxideinheiten
Polyol C: Polyether basierend auf Trimethylolpropan als Startermolekül mit einer Hydroxylzahl von 550 mg KOH/g und 100 Gew.-% Propylenoxideinheiten bezogen auf die Gesamtmenge der Alkylenoxideinheiten
Polyol D: Polyether basierend auf Propylenglykol als Startermolekül mit einer Hydroxylzahl von 515 mg KOH/g und 100 Gew.-% Propylenoxideinheiten bezogen auf die Gesamtmenge der Alkylenoxideinheiten
Polyol E: Polyether aus Glycerin als Startermolekül mit einer Hydroxylzahl von 28 mg KOH/g, mit endständig überwiegend primären Hydroxylgruppen und mit 85 Gew.-% Propylenoxid und 15 Gew.-% Ethylenoxideinheiten bezogen auf die Gesamtmenge der Alkylenoxideinheiten
Polyol F: Polyether aus Glycerin als Startermolekül mit einer Hydroxylzahl von 550 mg KOH/g und 100 Gew.-% Ethylenoxideinheiten bezogen auf die Gesamtmenge der Alkylenoxideinheiten
Polyol G: Polyether aus Glycerin als Startermolekül mit einer Hydroxylzahl von 38 mg KOH/g, mit endständig überwiegend primären Hydroxylgruppen und mit 25 Gew.-% Propylenoxid und 75 Gew.-% Ethylenoxideinheiten bezogen auf die Gesamtmenge der Alkylenoxideinheiten
Polyol H: Glycerin
Stabilisator 1: Silikonstabilisator, erhältlich als Niax SR-234, Fa. Momentive Performance Materials GmbH
Katalysator 1: N-(3-dimethylaminopropyl)-N,N-diisopropanolamin, erhältlich als Jeffcat DPA, Fa. Huntsman Holland BV
Katalysator 2: N-[2-[2-(Dimethylamino)ethoxy]ethyl]-N-methyl-1,3-propandiamin, erhältlich als DABCO NE 300, Evonik Nutrition&Care GmbH
Isocyanat 1: MDI mit einem Isocyanatgehalt von 31,1 Gew.-% und einem Anteil an monomerem MDI von 38 Gew.-%
Isocyanat 2: MDI mit einem Isocyanatgehalt von 32,0 Gew.-% und einem Anteil an monomerem MDI von 62 Gew.-%

Zur Herstellung der Schaumstoffe in diskontinuierlicher Herstellweise (nicht erfindungsgemäße Beispiele 2, 4, 6, 8, 10 und 12) wurden die Rohstoffe in einem Pappbecher zunächst gründlich vermischt. Dann wurde das erhaltene Gemisch in eine Papierform der Dimension 20 cm x 20 cm x 15 cm gegeben. Nach erfolgtem Aufschäumen wurden die Schaumkörper 48 Stunden gelagert. Danach wurden die für die physikalischen Prüfungen erforderlichen Prüfkörper in die gemäß Norm erforderliche Dimension gesägt.

Für die Herstellung von Schaumstoffen in kontinuierlicher Herstellweise (erfindungsgemäße Beispiele 1 und 5, nicht erfindungsgemäße Beispiele 3, 7, 9 und 11) wurde eine Schäumform der Dimension 15 cm x 15 cm x 70 cm kontinuierlich mit konstanter Geschwindigkeit unter einer räumlich fixen Austragsvorrichtung bewegt, aus der das Gemisch der Ausgangsstoffe auf die sich bewegende Schäumform aufgebracht wurde.

Die in den Beispielen verwendeten Rohstoffe wurden gemäß Tabelle 1 eingesetzt. Mengenangaben beziehen sich in allen Fällen auf Gewichtsteile.

**Tabelle 1: Beispiele**

| Beispiel Nr. | 1 | 2 (Vergleich) | 3 (Vergleich) | 4 (Vergleich) | 5 | 6 (Vergleich) | 7 (Vergleich) | 8 (Vergleich) |
|---|---|---|---|---|---|---|---|---|
| Herstellweise | kontinuierlich | diskontinuierlich | kontinuierlich | diskontinuierlich | kontinuierlich | diskontinuierlich | kontinuierlich | diskontinuierlich |
| Polyol A | 46,2 | 46,2 | 46,2 | 46,2 | 46,2 | 46,2 | 46,2 | 46,2 |
| Polyol B | 13,6 | 13,6 | 13,6 | 13,6 | 13,6 | 13,6 | 13,6 | 13,6 |
| Polyol C | 19,4 | 19,4 | 19,4 | 19,4 | 19,4 | 19,4 | 19,4 | 19,4 |
| Polyol D | 13,6 | 13,6 | 13,6 | 13,6 | 13,6 | 13,6 | 13,6 | 13,6 |
| EO-Gehalt* [Gew.-%] | 18,3 | 18,3 | 18,3 | 18,3 | 18,3 | 18,3 | 18,3 | 18,3 |
| Katalysator 1 | 0,30 | 0,30 | 0,30 | 0,30 | 0,30 | 0,30 | 0,30 | 0,30 |
| Katalysator 2 | 0,35 | 0,35 | 0,35 | 0,35 | 0,35 | 0,35 | 0,35 | 0,35 |
| Stabilisator 1 | 0,19 | 0,19 | 0,19 | 0,19 | 0,19 | 0,19 | 0,19 | 0,19 |
| Wasser | 5,95 | 5,95 | 5,95 | 5,95 | 5,50 | 5,50 | 5,50 | 5,50 |
| Isocyanat 1 | - | - | 166,8 | 166,8 | - | - | 160,2 | 160,2 |
| Isocyanat 2 | 161,6 | 161,6 | - | - | 155,2 | 155,2 | - | - |
| Kennzahl | 108 | 108 | 108 | 108 | 108 | 108 | 108 | 108 |
| Rohdichte [kg m⁻³] | 25 | 26 | 27 | 27 | 29 | 30 | 28 | 29 |
| Bruchdehnung [%] | 17 | 15 | 12 | 10 | 20 | 17 | 13 | 12 |

| | | | | | | | | |
|---|---|---|---|---|---|---|---|---|
| *der EO-Gehalt bezeichnet den Gehalt an Ethylenoxid, bezogen auf die Gesamtmenge aller Alkylenoxideinheiten in den Polyetherpolyolen A - D bzw. E - G | | | | | | | | |

**Tabelle 2: Beispiele (Fortsetzung)**

| Beispiel Nr. | 9 (Vergleich) | 10 (Vergleich) | 11 (Vergleich) | 12 (Vergleich) |
|---|---|---|---|---|
| Herstellweise | kontinuierlich | diskontinuierlich | kontinuierlich | diskontinuierlich |
| Polyol E | 34,7 | 34,7 | 34,7 | 34,7 |
| Polyol F | 32,5 | 32,5 | 32,5 | 32,5 |
| Polyol G | 21,4 | 21,4 | 21,4 | 21,4 |
| Polyol H | 4,27 | 4,27 | 4,27 | 4,27 |
| EO-Gehalt* [Gew.-%] | 56,0 | 56,0 | 56,0 | 56,0 |
| Katalysator 1 | 0,30 | 0,30 | 0,30 | 0,30 |
| Katalysator 2 | 0,35 | 0,35 | 0,35 | 0,35 |
| Stabilisator 1 | 0,19 | 0,19 | 0,19 | 0,19 |
| Wasser | 5,45 | 5,45 | 5,45 | 5,45 |
| Isocyanat 1 | - | - | 159,3 | 159,3 |
| Isocyanat 2 | 156,1 | 156,1 | - | - |
| Kennzahl | 108 | 108 | 108 | 108 |
| Rohdichte [kg m⁻³] | 32 | 27 | 33 | 30 |
| Bruchdehnung [%] | 17 | 14 | 12 | 9 |

| | | | | |
|---|---|---|---|---|
| *der EO-Gehalt bezeichnet den Gehalt an Ethylenoxid, bezogen auf die Gesamtmenge aller Alkylenoxideinheiten in den Polyetherpolyolen A - D bzw. E - G | | | | |

Die Ergebnisse belegen, dass die Verwendung des erfindungsgemäßen Isocyanats 2 erheblich verbesserte Bruchdehnungswerte im resultierenden Schaumstoff gegenüber der Verwendung des nicht erfindungsgemäßen Isocyanats 1 zeitigt. Außerdem erweist es sich, dass die erfindungsgemäße kontinuierliche Verschäumung weiter verbesserte Bruchdehnungswerte gegenüber der nicht erfindungsgemäßen diskontinuierlichen Herstellweise ergibt.

In den Vergleichsbeispielen 9 bis 12 wurde eine an die in EP 2 700 669 A1 offenbarte Polyolkomponente mit hohen Ethylenoxidgehalten angelehnte Polyolkomponente verwendet. Es wurde eine höhere Rohdichte als im zitierten Dokument angestrebt, um die Bruchdehnungswerte besser vergleichen zu können. Grundsätzlich gilt der einfache Zusammenhang, dass bei einer höheren Dichte auch eine höhere Bruchdehnung zu erwarten ist. Im kontinuierlich durchgeführten Vergleichsbeispielen 9 weist der resultierende Schaumstoff jedoch erst bei einer zum Beispiel 1 um 28% erhöhten Rohdichte einen identischen Bruchdehnungswert auf.

## Patentansprüche

1. Verfahren zur kontinuierlichen Herstellung von Polyurethanschaumstoff mit einer Rohdichte gemäß DIN EN 826:05/2013 von nicht mehr als 32 kg/m³, umfassend die Schritte
i) Bereitstellen
einer Isocyanatkomponente A umfassend
A1 55 - 90 Gew.-% monomeres Methylendiphenylisocyanat, bezogen auf die Gesamtmenge an Isocyanatkomponente A,
einer gegenüber Isocyanaten reaktiven Komponente B umfassend gegenüber Isocyanaten reaktive, Alkylenoxideinheiten aufweisende, Verbindungen, wobei, falls die gegenüber Isocyanaten reaktive Komponente B ein Polyetherpolyol oder mehrere Polyetherpolyole umfasst, die Alkylenoxideinheiten des Polyetherpolyols beziehungsweise der Polyetherpolyole im arithmetischen Durchschnitt weniger als 40 Gew.-%, bezogen auf die Gesamtmenge der Alkylenoxideinheiten des Polyetherpolyols beziehungsweise der Polyetherpolyole, Ethylenoxid umfassen,
einer Katalysatorkomponente C
einer Treibmittelkomponente D umfassend Wasser,
einer Schaumstabilisatorkomponente E
und gegebenenfalls einer Hilfs- und/oder Zusatzkomponente F umfassend Hilfs- und/oder Zusatzmittel,
ii) Vermischen der Komponenten A, B, C, D und E sowie gegebenenfalls F, wobei die Kennzahl 85 - 125 beträgt, um eine Mischung zu erhalten,
iii) Austragen der in Schritt ii) erhaltenen Mischung aus einer Austragsvorrichtung auf eine Fläche, wobei die Fläche und die Austragsvorrichtung sich während zumindest eines Teils des Austragens kontinuierlich relativ zueinander bewegen, um eine ausgetragene Mischung zu erhalten
iv) Schäumenlassen der in Schritt iii) erhaltenen ausgetragenen Mischung auf der Fläche, um eine geschäumte Mischung zu erhalten,
v) Aushärtenlassen der in Schritt iv) erhaltenen geschäumten Mischung, um den Polyurethanschaumstoff zu erhalten.

2. Verfahren gemäß Anspruch 1, wobei die Komponente D Wasser in einer Menge von wenigstens 4,0 Gew.-%, bezogen auf die Menge der Komponente B, umfasst.

3. Verfahren gemäß einem der Ansprüche 1 oder 2, wobei die Treibmittelkomponente D aus Wasser besteht.

4. Verfahren gemäß einem der Ansprüche 1 bis 3, wobei die gegenüber Isocyanaten reaktive Komponente B umfasst:
B1 Polyetherpolyol mit einer OH-Zahl von 25 - 60 mg KOH/g und einer Funktionalität f von 2,0 - 6,0, erhältlich aus der Reaktion einer Startersubstanz b1 mit Ethylenoxid und Propylenoxid, wobei der Anteil an von Ethylenoxid abgeleiteten Einheiten im Polyetherpolyol B1 10 - 40 Gew.-% bezogen auf die Gesamtmenge der von Ethylenoxid und Propylenoxid abgeleiteten Einheiten beträgt,
B2 Polyetherpolyol mit einer OH-Zahl von 150 - 650 mg KOH/g und einer Funktionalität f von 3,0 - 6,0,
B3 Polyetherpolyol mit einer OH-Zahl von 300 - 900 mg KOH/g und einer Funktionalität f von 2,0 - 2,9.

5. Verfahren gemäß Anspruch 4, wobei die Menge an B1 10 - 60 Gew.-%, die Menge an B2 10 - 50 Gew.-% und die Menge an B3 5 - 30 Gew.-%, jeweils bezogen auf die Gesamtmenge an gegenüber Isocyanaten reaktiver Komponente B, beträgt.

6. Verfahren gemäß einem der Ansprüche 4 bis 5, wobei die gegenüber Isocyanaten reaktive Komponente weiterhin umfasst:
B4 Polyesterpolyol mit einer OH-Zahl von 150 - 500 mg KOH/g und einer Funktionalität f von 2,0 - 3,5.

7. Verfahren gemäß einem der Ansprüche 1 bis 6, wobei die Katalysatorkomponente mindestens zwei katalytisch wirksame Verbindungen umfasst.

8. Verfahren gemäß einem der Ansprüche 1 bis 7, wobei die Katalysatorkomponente mindestens ein katalytisch wirksames einbaubares Amin, das heißt ein gegenüber Isocyanaten reaktives Amin, und mindestens ein katalytisch wirksames nicht einbaubares Amin, das heißt ein gegenüber Isocyanaten nicht reaktives Amin, umfasst.

9. Verfahren gemäß einem der Ansprüche 1 bis 8, wobei es sich um ein Verfahren zur kontinuierlichen Herstellung von Polyurethanschaumstoff mit einer Bruchdehnung gemäß DIN 53430:09/1975 von wenigstens 16% handelt.

10. Verfahren gemäß einem der Ansprüche 1 bis 9, wobei es sich nicht um ein auf einem Doppeltransportband durchgeführtes Verfahren handelt.

11. Verfahren gemäß einem der Ansprüche 1 bis 10, wobei die Mischung keine oder im Wesentlichen keine Carbonsäuren mit einer Funktionalität von mindestens 2 umfasst.

12. Polyurethanschaumstoff mit einer Rohdichte gemäß DIN EN 826:05/2013 von nicht mehr als 32 kg/m³, erhältlich nach dem Verfahren gemäß einem der Ansprüche 1 bis 11.

13. Polyurethanschaumstoff gemäß Anspruch 12 mit einer Bruchdehnung gemäß DIN 53430:09/1075 von wenigstens 16%.

14. Verwendung des Polyurethanschaumstoffs gemäß einem der Ansprüche 12 oder 13 in einer Automobilinnenraumverkleidung wie einem Dachhimmel, einer Kofferraumauskleidung oder einer Säulenverkleidung.

## Claims

1. Process for continuous production of polyurethane foam having an apparent density according to DIN EN 826:05/2013 of not more than 32 kg/m³, comprising the steps of
i) providing
an isocyanate component A comprising
A1 55-90% by weight of monomeric methylenediphenyl isocyanate based on the total amount of isocyanate component A,
an isocyanate-reactive component B comprising isocyanate-reactive compounds having alkylene oxide units, wherein, if the isocyanate-reactive component B comprises one or more polyether polyols, the alkylene oxide units in the polyether polyol(s) on arithmetic average comprise less than 40% by weight of ethylene oxide based on the total amount of the alkylene oxide units in the polyether polyol(s),
a catalyst component C,
a blowing agent component D comprising water,
a foam stabilizer component E
and optionally an auxiliary and/or additive component F comprising auxiliary and/or additive substances,
ii) mixing the components A, B, C, D and E and optionally F, wherein the index is 85-125, to obtain a mixture,
iii) dispensing the mixture obtained in step ii) from a dispensing apparatus onto a surface, wherein the surface and the dispensing apparatus are in continuous motion relative to one another during at least part of said dispensing, to obtain a dispensed mixture,
iv) foaming the dispensed mixture obtained in step iii) on the surface to obtain a foamed mixture,
v) curing the foamed mixture obtained in step iv) to obtain the polyurethane foam.

2. Process according to Claim 1, wherein component D comprises water in an amount of at least 4.0% by weight based on the amount of component B.

3. Process according to either of Claims 1 or 2, wherein the blowing agent component D is composed of water.

4. Process according to any of Claims 1 to 3, wherein the isocyanate-reactive component component B comprises:
B1 a polyether polyol having an OH number of 25-60 mg KOH/g and a functionality f of 2.0-6.0 obtainable from the reaction of a starter substance b1 with ethylene oxide and propylene oxide, wherein the content of units derived from ethylene oxide in polyether polyol B1 is 10-40% by weight based on the total amount of the units derived from ethylene oxide or propylene oxide,
B2 a polyether polyol having an OH number of 150-650 mg KOH/g and a functionality f of 3.0-6.0,
B3 a polyether polyol having an OH number of 300-900 mg KOH/g and a functionality f of 2.0-2.9.

5. Process according to Claim 4, wherein the amount of B1 is 10-60% by weight, the amount of B2 is 10-50% by weight and the amount of B3 is 5-30% by weight, in each case based on the total amount of isocyanate-reactive component B.

6. Process according to either of Claims 4 or 5, wherein the isocyanate-reactive component further comprises:
B4 a polyester polyol having an OH number of 150-500 mg KOH/g and a functionality f of 2.0-3.5.

7. Process according to any of Claims 1 to 6, wherein the catalyst component comprises at least two catalytically active compounds.

8. Process according to any of Claims 1 to 7, wherein the catalyst component comprises at least one catalytically active incorporable amine, i.e. an isocyanate-reactive amine, and at least one catalytically active non-incorporable amine, i.e. an isocyanate-unreactive amine.

9. Process according to any of Claims 1 to 8, wherein said process is a process for continuous production of polyurethane foam having a breaking elongation according to DIN 5340:09/1975 of at least 16%.

10. Process according to any of Claims 1 to 9, wherein said process is not a process performed on a double conveyor belt.

11. Process according to any of Claims 1 to 10, wherein the mixture contains no or substantially no carboxylic acids having a functionality of 2 or more.

12. Polyurethane foam having an apparent density according to DIN 826:05/2013 of not more than 32 kg/m³ obtainable by the process according to any of Claims 1 to 11.

13. Polyurethane foam according to Claim 12 having a breaking elongation according to DIN 53430:09/1975 of at least 16%.

14. Use of the polyurethane foam according to either of Claims 12 or 13 in an automotive interior trim such as a headliner, a boot lining or a pillar trim.

## Revendications

1. Procédé de production en continu de mousse de polyuréthane ayant une masse volumique apparente selon la norme DIN EN 826:05/2013 ne dépassant pas 32 kg/m³, comprenant les étapes suivantes :
i) la fourniture
d'un composant isocyanate A comprenant
A1 55 à 90 % en poids d'isocyanate de méthylènediphényle monomère, par rapport à la quantité totale de composant isocyanate A,
d'un composant B réactif aux isocyanates comprenant des composés réactifs aux isocyanates, présentant des unités d'oxyde d'alkylène, dans lequel, si le composant B réactif aux isocyanates comprend un polyétherpolyol ou plusieurs polyétherpolyols, les unités d'oxyde d'alkylène du polyétherpolyol ou des polyétherpolyols comprennent en moyenne arithmétique moins de 40 % en poids, par rapport à la quantité totale des unités d'oxyde d'alkylène du polyétherpolyol ou des polyétherpolyols, d'oxyde d'éthylène,
d'un composant catalytique C,
d'un composant propulseur D comprenant de l'eau,
d'un composant stabilisateur de mousse E,
et éventuellement d'un composant adjuvant et/ou additif F comprenant des adjuvants et/ou des additifs,
ii) le mélange des composants A, B, C, D et E et éventuellement F, l'indice étant de 85 - 125, pour obtenir un mélange,
iii) le déchargement du mélange obtenu à l'étape ii) à partir d'un dispositif de déchargement sur une surface, la surface et le dispositif de déchargement se déplaçant continuellement l'un par rapport à l'autre pendant au moins une partie du déchargement, afin d'obtenir un mélange déchargé,
iv) le fait de laisser le mélange déchargé obtenu à l'étape iii) mousser sur la surface afin d'obtenir un mélange moussé,
v) le fait de laisser durcir le mélange moussé obtenu à l'étape iv), afin d'obtenir la mousse de polyuréthane.

2. Procédé selon la revendication 1, dans lequel le composant D comprend de l'eau en une quantité d'au moins 4,0 % en poids par rapport à la quantité du composant B.

3. Procédé selon l'une quelconque des revendications 1 ou 2, dans lequel le composant propulseur D est constitué d'eau.

4. Procédé selon l'une quelconque des revendications 1 à 3, dans lequel le composant réactif aux isocyanates B comprend :
B1 un polyétherpolyol ayant un indice OH de 25 à 60 mg de KOH/g et une fonctionnalité f de 2,0 à 6,0, pouvant être obtenu à partir de la réaction d'une substance de départ b1 avec de l'oxyde d'éthylène et de l'oxyde de propylène, la proportion d'unités dérivées d'oxyde d'éthylène dans le polyétherpolyol B1 étant de 10 à 40 % en poids par rapport à la quantité totale d'unités dérivées d'oxyde d'éthylène et d'oxyde de propylène,
B2 un polyétherpolyol ayant un indice OH de 150 - 650 mg de KOH/g et une fonctionnalité f de 3,0 - 6,0,
B3 un polyétherpolyol ayant un indice OH de 300 - 900 mg de KOH/g et une fonctionnalité f de 2,0 - 2,9.

5. Procédé selon la revendication 4, dans lequel la quantité de B1 est de 10 à 60 % en poids, la quantité de B2 est de 10 à 50 % en poids et la quantité de B3 est de 5 à 30 % en poids, dans chaque cas par rapport à la quantité totale de composant B réactif aux isocyanates.

6. Procédé selon l'une quelconque des revendications 4 à 5, dans lequel le composant réactif aux isocyanates comprend en outre :
B4 un polyesterpolyol ayant un indice OH de 150 - 500 mg de KOH/g et une fonctionnalité f de 2,0 - 3,5.

7. Procédé selon l'une quelconque des revendications 1 à 6, dans lequel le composant catalytique comprend au moins deux composés catalytiquement actifs.

8. Procédé selon l'une quelconque des revendications 1 à 7, dans lequel le composant catalytique comprend au moins une amine catalytiquement active incorporable, c'est-à-dire une amine réactive aux isocyanates, et au moins une amine catalytiquement active non incorporable, c'est-à-dire une amine non réactive aux isocyanates.

9. Procédé selon l'une quelconque des revendications 1 à 8, dans lequel il s'agit d'un procédé de production en continu de mousse de polyuréthane ayant un allongement à la rupture selon la norme DIN 53430:09/1975 d'au moins 16 %.

10. Procédé selon l'une quelconque des revendications 1 à 9, dans lequel il ne s'agit pas d'un procédé mis en œuvre sur une double bande transporteuse.

11. Procédé selon l'une quelconque des revendications 1 à 10, dans lequel le mélange ne comprend pas ou substantiellement pas d'acides carboxyliques ayant une fonctionnalité d'au moins 2.

12. Mousse de polyuréthane ayant une masse volumique apparente selon la norme DIN EN 826:05/2013 ne dépassant pas 32 kg/m³, pouvant être obtenue par le procédé selon l'une quelconque des revendications 1 à 11.

13. Mousse de polyuréthane selon la revendication 12, ayant un allongement à la rupture selon la norme DIN 53430:09/1075 d'au moins 16 %.

14. Utilisation de la mousse de polyuréthane selon l'une quelconque des revendications 12 ou 13 dans une garniture intérieure d'automobile telle qu'un habillage de plafond, une garniture de coffre ou une garniture de montant.
